# EUROPÄISCHE PATENTSCHRIFT

(11) **EP 2 869 736 B1**
(45) Veröffentlichungstag und Bekanntmachung des Hinweises auf die Patenterteilung: **24.05.2023**
(21) Anmeldenummer: 13732519.7
(22) Anmeldetag: 28.06.2013
(51) Int. Cl.: A47J 27/00, G01F 23/24, G05D 9/12

(54) **VORRICHTUNG ZUR BESTIMMUNG EINES FLÜSSIGKEITSSTANDS IN EINER DAMPFERZEUGUNGSEINRICHTUNG EINES DAMPFGARGERÄTS, DAMPFGARGERÄT MIT EINER DERARTIGEN VORRICHTUNG SOWIE VERFAHREN ZUM BESTIMMEN EINES FLÜSSIGKEITSSTANDS**
DEVICE FOR DETERMINING A LIQUID LEVEL IN A STEAM GENERATOR OF A STEAM COOKER, STEAM COOKER HAVING SUCH A DEVICE, AND METHOD FOR DETERMINING A LIQUID LEVEL
DISPOSITIF DE DÉTERMINATION D'UN NIVEAU DE LIQUIDE DANS UN SYSTÈME DE PRODUCTION DE VAPEUR D'UN APPAREIL DE CUISSON À LA VAPEUR, APPAREIL DE CUISSON À LA VAPEUR ÉQUIPÉ D'UN SYSTÈME DE CE TYPE AINSI QUE PROCÉDÉ DE DÉTERMINATION D'UN NIVEAU DE LIQUIDE

(30) Priorität: 06.07.2012 EP 12290230
(43) Veröffentlichungstag der Anmeldung: 13.05.2015
(73) Patentinhaber: BSH Hausgeräte GmbH, 81739 München (DE)
(72) Erfinder: CHABUT, Nicolas, F-67000 Strasbourg (FR); CLAUSS, Stéphane, F-67140 Stotzheim (FR)
(86) Internationale Anmeldenummer: PCT/EP2013/063674
(87) Internationale Veröffentlichungsnummer: WO 2014/005947

(56) Entgegenhaltungen:
- EP-A1- 1 521 065
- EP-A2- 1 589 325
- EP-A2- 1 870 641
- WO-A2-2009/007456
- DE-A1- 10 027 183
- DE-A1-102007 026 273

## Beschreibung

Die Erfindung betrifft eine Vorrichtung zur Bestimmung eines Flüssigkeitsstands in einer Dampferzeugungseinrichtung eines Dampfgargeräts gemäß dem Oberbegriff des Anspruchs 1. Des Weiteren betrifft die Erfindung ein Dampfgargerät mit einer entsprechenden Vorrichtung gemäß dem Oberbegriff des Anspruchs 8 sowie ein Verfahren zum Bestimmen eines Flüssigkeitsstands in einer Dampferzeugungseinrichtung eines Dampfgargeräts gemäß dem Oberbegriff des Anspruchs 9.

Bei einem Dampfgargerät ist es üblich, dass eine Dampferzeugungseinrichtung vorgesehen ist, mittels welcher eine Flüssigkeit so erhitzt wird, dass Dampf entsteht, welcher dann in einen Garraum des Dampfgargeräts eingebracht wird bzw. dort erzeugt wird, um darin eingebrachte Lebensmittel zuzubereiten.

Üblich und bekannt sind in diesem Zusammenhang Verdampferschalen, die beispielsweise in einem Boden einer den Garraum begrenzenden Muffel angeordnet sind. An dieser Verdampferschale ist zumindest ein Heizkörper angeordnet, mittels welchem das in die Verdampferschale eingeleitete Wasser erhitzt und verdampft werden kann.

Bei den bekannten Dampfgargeräten ist im Hinblick auf die Funktionalität die Kenntnis über den Füllstand der Flüssigkeit in der Verdampferschale wesentlich. Ein zu niedriger Füllstand oder gar eine leere Verdampferschale führt zu erheblichen Beeinträchtigungen beim Betrieb und insbesondere bei der Dampferzeugung und somit auch bei der Gargutzubereitung bzw. kann zu Defekten des Dampfgargeräts führen.

Die EP 1 870 641 A2 offenbart eine Verdampfereinrichtung, eine Auswertungsvorrichtung sowie ein Verfahren zum Betrieb einer Verdampfereinrichtung.

Die WO 2009/007456 A2 offenbart eine Vorrichtung zur Zugabe von Wasser zur Dampferzeugung in einem Gargerät.

Die DE 10 2007 026 273 A1 offenbart einen Sensor und einen damit ausgestatteten Abscheidebehälter.

Es ist Aufgabe der vorliegenden Erfindung, eine Vorrichtung, ein Dampfgargerät sowie eine Verfahren zu schaffen, mittels welcher bzw. mittels welchem die Füllstandserkennung präzisiert und im Hinblick auf den baulichen Aufwand möglichst einfach gestaltet ist.

Diese Aufgabe wird durch eine Vorrichtung, ein Dampfgargerät und ein Verfahren gemäß den kennzeichnenden Teilen der unabhängigen Ansprüchen gelöst.

Eine erfindungsgemäße Vorrichtung zur Bestimmung eines Flüssigkeitsfüllstands in einer Dampferzeugungseinrichtung eines Dampfgargeräts umfasst einen Behälter für die Flüssigkeit und eine Elektrodenanordnung. Die Elektrodenanordnung weist eine erste Elektrode und eine davon beabstandet angeordnete zweite Elektrode auf. Die beiden Elektroden erstrecken sich in den Behälter. Die Vorrichtung umfasst darüber hinaus eine Auswerteeinheit, welche zur Erfassung eines von einem Ist-Flüssigkeitsfüllstand abhängigen elektrischen Ist-Widerstandswerts zwischen Elektroden ausgebildet ist. Abhängig von diesem Ist-Widerstandswert ist die Auswerteeinheit dazu ausgebildet, den Ist-Flüssigkeitsfüllstand zu bestimmen. Durch eine derartige Ausgestaltung einer Vorrichtung kann eine sehr einfache und dennoch im Hinblick auf die Flüssigkeitsstandsermittlung sehr präzise Ausgestaltung realisiert werden. Sie ist darüber hinaus auch sehr platzsparend und langlebig präzise funktionsfähig.

Eine Elektrode, insbesondere die zweite Elektrode, kann auch der Erdungskontakt bzw. die Masse der Dampferzeugungseinrichtung sein.

Es ist vorgesehen, dass in der Vorrichtung ein erster elektrischer Referenzwiderstandswert abgespeichert ist, welcher einen Flüssigkeitsstand in dem Behälter charakterisiert, bei dem die Flüssigkeit beide Elektroden benetzt. Insbesondere ist vorgesehen, dass dieser Flüssigkeitsstand die maximale Befüllung darstellt.

Es ist ferner vorgesehen, dass der zweite Referenzwiderstandswert durch die Summe des ersten Referenzwiderstandswerts und einem Widerstands-Veränderungswert gebildet ist. Es kann dabei auch vorgesehen sein, dass der Widerstands-Veränderungswert ein Vielfaches des ersten Referenzwiderstandswerts ist.

Es ist weiterhin vorgesehen, dass in der Vorrichtung, insbesondere der Auswerteeinheit, ein erster Referenzwiderstandswert abgespeichert ist, welcher einen oberen Flüssigkeitsstand charakterisiert, bei dem die Flüssigkeit beide Elektroden benetzt, und eine wertmäßige Änderung des Widerstandswerts ausgehend von dem ersten Referenzwiderstandswert als Widerstands-Veränderungswert abgespeichert ist. Die Auswerteeinheit ist derart ausgebildet, dass abhängig von einem Vergleich der abgespeicherten Änderung des Widerstandswerts mit einer Ist-Änderung des Ist-Widerstandswerts der Ist-Flüssigkeitsstand bestimmbar ist. Mit einer derartigen Ausführung ist in besonderer Vorteilhaftigkeit eine Bestimmung des Ist-Flüssigkeitsstands einfach und zuverlässig möglich. Immer dann, wenn eine entsprechende Wertänderung in einem bestimmten Maße auftritt, ist somit ein Nachfüllen erforderlich. Insbesondere unabhängig davon, welche Flüssigkeit in dem Behälter zur Verdampfung vorgesehen und gerade verwendet ist, kann somit quasi immer dann von einem Nachfüllen ausgegangen werden, wenn sich der elektrische Widerstand zwischen den Elektroden um den vorgegebenen Wert geändert hat. Denn dann kann davon ausgegangen werden, dass bei dem ursprünglich eingestellten Befüllungsgrad, bei dem die Flüssigkeit bis zum oberen Flüssigkeitsstand aufgefüllt ist, eine gewisse definierte Menge verdampft ist und sich somit der Flüssigkeitsstand erniedrigt hat, was durch den fest vorgegebenen Wert der Widerstandsänderung definiert ist.

Vorzugsweise ist vorgesehen, dass die Vorrichtung derart ausgebildet ist, dass ein zweiter elektrischer Referenzwiderstandswert abgespeichert ist, welcher einen unteren Flüssigkeitsstand charakterisiert, bei dem der Behälter nicht maximal gefüllt ist. Insbesondere ist vorgesehen, dass der untere Flüssigkeitsfüllstand ein Nachfüll-Flüssigkeitsstand ist, bei welchem Flüssigkeit in den Behälter geleitet wird. Es kann dabei vorgesehen sein, dass die Auswerteeinheit auch zum Steuern von derartigen Nachfüllprozessen ausgebildet ist und in dem Zusammenhang Zuleitung von Flüssigkeit in den Behälter automatisch ermöglicht. Insbesondere ist der Nachfüll-Flüssigkeitsstand derart zu verstehen, dass, um Funktionsbeeinträchtigungen beim Zubereitungsvorgang Insbesondere ist der Widerstands-Veränderungswert unabhängig von der Art der verwendeten Flüssigkeit vorgegeben. Dadurch kann eine für mehrere unterschiedliche Flüssigkeiten allgemein verwendbare Flüssigkeitsstandsbestimmung erfolgen.

Vorzugsweise ist der erste Referenzwiderstandswert abhängig von der Art der verwendeten Flüssigkeit. Dadurch werden flüssigkeitsindividuelle Ausgangswerte erzeugt, von denen dann im Weiteren jedoch mit gleichen Ansätzen und Vorgehensweisen die Flüssigkeitsstände bestimmbar sind.

In einer besonders bevorzugten Ausführung ist vorgesehen, dass in der Vorrichtung, insbesondere der Auswerteeinheit, ein erster Referenzwiderstandswert abgespeichert ist, welcher einen oberen Flüssigkeitsstand charakterisiert, bei dem die Flüssigkeit beide Elektroden benetzt, und eine wertmäßige Änderung des Widerstandswerts ausgehend von dem ersten Referenzwiderstandswert als Widerstands-Veränderungswert abgespeichert ist. Die Auswerteeinheit ist derart ausgebildet, dass abhängig von einem mittels des erzeugten Dampfs oder gar Defekte der Vorrichtung zu vermeiden, dann eine Flüssigkeitszufuhr in den Behälter erforderlich ist. Der Nachfüll-Flüssigkeitsstand stellt daher insbesondere auch einen Sicherheitsbefüllungsgrad dar, bei dem eine Beschädigung der Vorrichtung im weiteren Betrieb noch vermieden ist.

Es ist vorgesehen, dass die Elektroden in vertikaler Richtung betrachtet übereinander und beabstandet zueinander angeordnet sind. Sie können jedoch auch horizontal nebeneinander angeordnet sein und sich mit ihren untersten Stelle auf gleichem Höhenniveau befinden.

In einer vorteilhaften Ausführung ist vorgesehen, dass die Auswerteeinheit derart ausgebildet ist, dass der Ist-Widerstandswert mit zumindest einem Referenzwiderstandswert verglichen wird und abhängig davon ein Flüssigkeitsstand bestimmbar ist.

Insbesondere ist der Widerstands-Veränderungswert unabhängig von der Art der verwendeten Flüssigkeit vorgegeben. Dadurch kann eine für mehrere unterschiedliche Flüssigkeiten allgemein verwendbare Flüssigkeitsstandsbestimmung erfolgen.

Vorzugsweise ist der erste Referenzwiderstandswert abhängig von der Art der verwendeten Flüssigkeit. Dadurch werden flüssigkeitsindividuelle Ausgangswerte erzeugt, von denen dann im Weiteren jedoch mit gleichen Ansätzen und Vorgehensweisen die Flüssigkeitsstände bestimmbar sind.

Bei allen unterschiedlichen verwendbaren Flüssigkeiten in dem Dampfgargerät kann somit stets davon ausgegangen werden, dass ein Nachfüllen erforderlich ist, wenn sich ausgehend von dem Befüllungsgrad mit dem oberen Flüssigkeitsstand im Weiteren der elektrische Ist-Widerstand wertmäßig so ändert, dass er der Änderung des Widerstandswerts bei der Referenzmessung entspricht.

Wird in dem Zusammenhang beispielsweise festgestellt, dass der erste Referenzwiderstand für eine spezifische Flüssigkeit durch die Zahl 1 charakterisiert ist und dann, wenn sich eine Widerstandsänderung als flüssigkeitsunabhäniger festgelegter Widerstands-Veränderungswert um die Zahl 3 zum Widerstandswert 4, der den zweiten Referenzwiderstandswert darstellt, hin ändert, dieser Änderungswert betreffend die Zahl 3 charakteristisch dafür ist, dass ein Befüllungsgrad und somit auch ein Flüssigkeitsstand im Behälter erreicht ist, der ein Nachfüllen erforderlich macht.

In dem Zusammenhang sei auch erwähnt, dass der untere Füllstand auch in beliebiger anderer Weise definiert werden kann und nicht zwangsweise einen oben erläuterten und definierten Nachfüll-Füllstand darstellen soll.

Es ist vorgesehen, dass eine wertmäßige Änderung des Widerstandswerts zwischen dem ersten Referenzwiderstandswert und einem einen unteren Flüssigkeitsstand im Behälter charakterisierenden zweiten Referenzwiderstandswert abgespeichert wird, und abhängig von einem Vergleich der abgespeicherten Änderung des Widerstandswerts mit einer Ist-Änderung des Ist-Widerstandswerts der momentane Ist-Flüssigkeitsstand im Behälter bestimmt wird.

Vorzugsweise ist vorgesehen, dass die Bestimmung des Ist-Flüssigkeitsstands eine Relativbestimmung ist. Diese ist insbesondere unabhängig von der Flüssigkeitszusammensetzung und abhängig von der relativen Änderung des Widerstandswerts. Durch eine derartige Ausgestaltung der Vorrichtung kann somit für eine Vielzahl von unterschiedlichen Flüssigkeiten eine für alle Flüssigkeiten allgemein gültige Vorgehensweise und Ausgestaltung der Vorrichtung geschaffen werden, durch die immer dann, wenn eine definierte Änderung eines elektrischen Widerstands zwischen den Elektroden auftritt, auf einen unteren Flüssigkeitsstand geschlossen werden kann, der dann eine zugrunde gelegte weitere Handlung bedingt, beispielsweise ein Warnhinweis ausgegeben wird und/oder ein Befüllen des Behälters mit Flüssigkeit erfolgen lässt.

Des Weiteren betrifft die Erfindung auch ein Dampfgargerät mit einer erfindungsgemäßen Vorrichtung oder einer vorteilhaften Ausgestaltung davon. Die Dampferzeugungseinrichtung des Dampfgargeräts kann in dem Zusammenhang eine Verdampferschale aufweisen, in welche eine Zuleitung zum Zuleiten von Flüssigkeit in die Verdampferschale ermöglicht. In dem Zusammenhang kann ein Flüssigkeitstank vorgesehen sein, der mit der genannten Leitung mit der Verdampferschale verbunden ist. Ein Ventil kann in dem Zusammenhang beispielsweise über die zur Ablaufsteuerung ausgebildete Auswerteeinheit geöffnet und geschlossen werden.

In bevorzugter Weise ist vorgesehen, dass der abgespeicherte Wert der Widerstandsänderung abhängig von den verwendeten Elektroden und/oder anderweitigen Sensoren ausgebildet ist.

Es sei an dieser Stelle nochmals erwähnt, dass der erste Referenzwiderstandswert insbesondere abhängig von der jeweils verwendeten Flüssigkeit ist und somit individuell variieren kann. Ist dieser erste Referenzwiderstandswert bei einer Kalibrierung festgestellt und ermittelt, kann dann ausgehend davon das Nachfüllerfordernis einfach dadurch bestimmt werden, dass ausgehend von diesem ersten Referenzwiderstandswert eine Änderung des Widerstandswerts beobachtet und im Hinblick auf den abgespeicherten Widerstandsänderungswert überwacht wird. Wird dann bei dieser spezifischen Flüssigkeit ein Füllstand erreicht, bei dem der Wert dieser Widerstandsänderung ausgehend von dem flüssigkeitsabhängigen ersten Referenzwiderstandswert eingetreten ist, so kann der untere Flüssigkeitsstand automatisch detektiert werden, welcher dann für diese spezifische Flüssigkeit ebenfalls eingetreten ist und insbesondere ein Nachfüllen erforderlich macht.

Beispielsweise ist bei einem Osmosewasser, welches ein hochreines, weiches Wasser mit einem leicht sauren ph-Wert charakterisiert, der erste Referenzwiderstandswert beim oberen Füllstand im Vergleich zu einem Nicht-Osmosewasser relativ hoch.

Des Weiteren betrifft die Erfindung ein Verfahren zur Bestimmung eines Flüssigkeitsstands in einer Dampferzeugungseinrichtung eines Dampfgargeräts, bei welchem ein Behälter bereitgestellt wird, in den Flüssigkeit zum Verdampfen eingefüllt werden kann. Es wird darüber hinaus auch eine Elektrodenanordnung bereitgestellt, bei welcher eine erste Elektrode angeordnet wird und davon beabstandet eine zweite Elektrode angeordnet wird. Die beiden Elektroden werden so positioniert, dass sie sich in den Behälter bzw. die Verdampferschale erstrecken, in welchem bzw. in welcher die eingeleitete Flüssigkeit verdampft wird. Bei dem erfindungsgemäßen Verfahren wird eine Erfassung eines von einem Ist-Flüssigkeitsstand abhängigen elektrischen Ist-Widerstandswerts zwischen den Elektroden durchgeführt und abhängig von dem bestimmten Ist-Widerstandswert wird der Ist-Flüssigkeitsstand im Behälter bestimmt.

In besonders vorteilhafter Weise wird vorgesehen, dass ein erster, insbesondere von der Zusammensetzung der Flüssigkeit abhängiger Referenzwiderstandswert bestimmt und abgespeichert wird, welcher einen oberen Flüssigkeitsstand in dem Behälter charakterisiert. Insbesondere ist vorgesehen, dass bei diesem oberen Flüssigkeitsstand die Flüssigkeit in dem Behälter eine unterste Stelle, insbesondere nur die unterste Stelle, der oberen zweiten Elektrode benetzt. Eine wertmäßige Änderung des Widerstandswerts und somit eine Änderung des Widerstandswert um einen bestimmten Zahlenwert wird ebenfalls festgelegt und abgespeichert. Tritt nun bei einer spezifischen Flüssigkeit im Behälter ausgehend von dem dann zugeordneten und durch eine Kalibrierung festgestellten ersten Referenzwiderstandswert eine Veränderung des Flüssigkeitsstands auf, die sich durch eine Änderung des Widerstandswerts manifestiert, so kann abhängig von dieser Änderung des Ist-Widerstandswerts auf den unteren Füllstand geschlossen werden. Dies erfolgt dahingehend, dass die Änderung des Ist-Widerstandswerts mit einer abgespeicherten Referenz-Änderung des Widerstandswerts verglichen wird und wenn diese Änderungen wertmäßig gleich sind, kann bei der spezifischen Flüssigkeit, die sich gegenwärtig in dem Behälter zum Verdampfen befindet, auf den unteren Füllstand geschlossen werden.

Vorzugsweise wird vorgesehen, dass die Bestimmung des Ist-Flüssigkeitsstands als eine relative Bestimmung durchgeführt wird. Insbesondere wird diese relative Bestimmung dahingehend durchgeführt, dass zwar der erste Referenzwiderstandswert in Abhängigkeit von der spezifischen Flüssigkeit bestimmt wird, die Wertzahl, um die sich der Widerstand ausgehend von diesem spezifischen ersten Referenzwiderstandswert ändert, um dann auf den unteren Füllstand schließen zu können, ist dann jedoch bei allen Flüssigkeiten gleich und somit flüssigkeitsunabhängig festgelegt.

Ein Ausführungsbeispiel der Erfindung wird nachfolgend anhand schematischer Zeichnungen näher erläutert. Es zeigen:
Fig. 1 eine schematische Darstellung von Teilkomponenten eines Ausführungsbeispiels einer erfindungsgemäßen Vorrichtung; und
Fig. 2 ein schematisches Diagramm, bei dem der elektrische Widerstand in Abhängigkeit von der Zeit aufgetragen ist und entsprechende Kennlinien eingezeichnet sind.

In den Figuren werden gleiche oder funktionsgleiche Elemente mit den gleichen Bezugszeichen versehen.

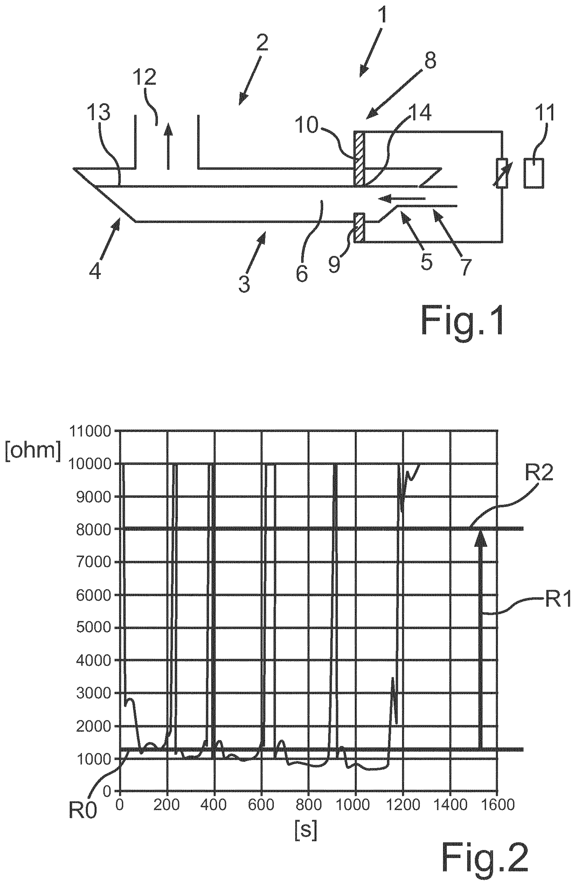

In Fig. 1 ist ein Ausführungsbeispiel eines Dampfgargeräts 1 mit Teilkomponenten einer Vorrichtung 2 zur Bestimmung eines Flüssigkeitsfüllstands in einer Dampferzeugungseinrichtung 3 des Dampfgargeräts 1 gezeigt. Die Vorrichtung 2 umfasst einen Behälter 4, der beispielsweise als Verdampferschale ausgebildet ist und beispielsweise an oder in einem Boden einer den Garraum des Dampfgargeräts 1 begrenzenden Muffel angeordnet ist. Der Behälter 4 umfasst einen Zulauf 5, über den Flüssigkeit 6 in die Verdampferschale bzw. den Behälter 4 einströmen kann.

An den Zulauf 5 ist eine Leitung 7 angeschlossen, die andererseits mit einem nicht gezeigten Flüssigkeitsbehälter verbunden ist, der als Speicherbehälter dient.

Die Vorrichtung 2 umfasst darüber hinaus eine Elektrodenanordnung 8 mit einer unteren ersten Elektrode 9 und einer zweiten oberen Elektrode 10. Die beiden Elektroden 9 und 10 sind in vertikaler Richtung betrachtet übereinander und beabstandet zueinander angeordnet. Die Elektroden 9 und 10 können jedoch auch horizontal nebeneinander angeordnet sein und sich mit untersten Stellen 14 auf gleichem Höhenniveau befinden.

Die beiden Elektroden 9 und 10 erstrecken sich darüber hinaus in den Behälter 4 hinein, so dass sie sie in Berührung mit der Flüssigkeit 6 gelangen können. Eine Elektrode, insbesondere die zweite Elektrode 10 kann ein Erdungskontakt bzw. ein Massepotenzial der Dampferzeugungseinrichtung 3 sein.

Die Vorrichtung 2 umfasst darüber hinaus eine Auswerteeinheit 11, die in Fig. 1 lediglich symbolhaft dargestellt ist.

Der Behälter 4 ist darüber hinaus mit zumindest einem Heizkörper ausgebildet, der an oder benachbart zu dem Behälter 4 angeordnet sein kann. Über diesen zumindest einen Heizkörper wird die Flüssigkeit 6 erhitzt, so dass sie verdampfen kann und über eine Öffnung 12 in den Garraum gelangen kann.

Im Ausführungsbeispiel ist eine Situation gezeigt, bei der ein unterer Füllstand 13 erreicht ist. Bei diesem unteren Füllstand 13 ist eine Befüllung erreicht, bei der eine unterste Stelle 14 der oberen zweiten Elektroden 10 dann gerade nicht mehr mit Flüssigkeit benetzt ist. Der Widerstand steigt im Vergleich zu einer Benetzung beider Elektroden 9 und 10 mit Flüssigkeit stark an. Dadurch wird ein erforderliches Nachfüllen erkannt.

Ausgehend von einem Befüllungszustand, bei dem der Flüssigkeitstand deutlich höher als der Flüssigkeitsstand 13 ist, und der durch einen ersten Referenzwiderstandswert R0 zwischen den Elektroden 9 und 10 charakterisiert ist, und welcher in der Auswerteeinheit 11 abgespeichert ist, ändert sich dieser Ist-Widerstand des Weiteren, wenn die Flüssigkeit 6 im Behälter 4 verdampft wird und somit der Flüssigkeitsstand sinkt, insbesondere bis zum Flüssigkeitsstand 13 sinkt. Zu Beginn des Verdampfungsprozesses werden nur geringe Änderungen des elektrischen Widerstands um den Wert R0 gemessen. Wenn der gemessene Ist-Wert ansteigt und dann einen abgespeicherten zweiten Referenzwiderstandswert R2 erreicht, der sich durch die Summe des Werts R0 und einem Widerstands-Veränderungswert R1 bildet, dann ist ein Ist-Flüssigkeitsstand gemäß dem Flüssigkeitstand 13 im Behälter 4 erreicht, bei dem Flüssigkeit nachgefüllt werden soll.

In besonderer Vorteilhaftigkeit ist vorgesehen, dass dieses erläuterte Verfahren zum Bestimmen des Füllstands in dem Behälter 4 als relative Bestimmung durchgeführt werden kann.

Dies bedeutet, dass zunächst ausgehend von einer spezifischen Flüssigkeit, die sich im Hinblick auf ihre Zusammensetzung dann auch auf das elektrische Widerstandsverhalten spezifisch charakterisiert, durch einen ersten Referenzwiderstandswert bei dem oberen Flüssigkeitsstand 13 spezifiziert wird. Dieser erste Referenzwiderstandswert ist somit abhängig von der jeweils vorhandenen Flüssigkeit bestimmt und ergibt sich somit im Hinblick auf seine Wertzahl ganz individuell.

Ausgehend von dieser flüssigkeitsabhängigen Ermittlung des ersten Referenzwiderstandswerts R0 wird eine Änderung des elektrischen Widerstandswerts festgelegt, die dann insbesondere zahlenmäßig so festgelegt wird, dass sie ausgehend von dem oberen Referenzwiderstandswert R0 einen unteren spezifischen Füllstand im Behälter 4 charakterisiert. Auch dieser vorgegebene Wert R1 der Widerstandsänderung wird in der Auswerteeinheit 11 abgespeichert.

Wird nun bei einem tatsächlichen Zubereitungsvorgang eine Dampferzeugung einer spezifischen Flüssigkeit durchgeführt, so kann zunächst über den dann diesbezüglich ganz individuell charakterisierenden ersten Referenzwiderstandswert R0 ausgehend davon eine ganz gezielte und definierte Feststellung eines unteren Füllstands bestimmt werden. Dies dahingehend, dass ausgehend von dem bekannten ersten Referenzwiderstandswert R0 im Weiteren dann flüssigkeitsunabhängig für jede Flüssigkeit die gleiche Wertänderung R1 des Widerstands zugrunde gelegt wird, um dann den unteren Füllstand bestimmen zu können. Dies bedeutet, dass für jede Flüssigkeit diese Zahl der Widerstandswertänderung bzw. der Widerstands-Veränderungswert R1 gleich ist, unabhängig davon, dass der erste Referenzwiderstandswert R0 für die Flüssigkeiten unterschiedlich ist.

In Fig. 2 ist in einem Diagramm eine entsprechende Situation näher dargelegt. So lässt sich erkennen, dass der auf der Vertikalachse aufgetragene elektrische Widerstand bei einem Befüllen des Behälters 4 bis zum oberen Füllstand 13 mit einer spezifischen Flüssigkeit zu einem ganz spezifischen flüssigkeitsabhängigen, insbesondere gemittelten ersten Referenzwiderstandswert R0 führt. Ausgehend davon wird dann bei einer Verdampfung dieser spezifischen Flüssigkeit und somit einer Reduzierung des Füllstands der untere Füllstand dadurch erkannt, dass eine vorgegebenen flüssigkeitsunabhängige Änderung R1 erfolgt ist und bei dieser spezifischen Flüssigkeit dies zu einem Widerstandswert gemäß dem zweiten Referenzwiderstandswert R2 geführt hat.

Es ist anzumerken, dass bei einer davon unterschiedlichen Flüssigkeit die Werte R0 und R2 unterschiedlich zu den in Fig. 2 sind, R1 jedoch auch für die andere Flüssigkeit gleich ist.

Beispielsweise ist bei einem Osmosewasser der Widerstandswert R0 größer als bei einem nicht so reinen anderen Wasser. Entsprechend ist dann auch der Widerstandswert R2 bei dem Osmosewasser höher als bei dem unreineren Wasser. Der Wert R1 ist jedoch bei beiden Wassern gleich und vorgegeben.

### Bezugszeichenliste

- 1: Dampfgargerät
- 2: Vorrichtung
- 3: Dampferzeugungseinrichtung
- 4: Behälter
- 5: Zulauf
- 6: Flüssigkeit
- 7: Leitung
- 8: Elektrodenanordnung
- 9: Elektrode
- 10: Elektrode
- 11: Auswerteeinheit
- 12: Öffnung
- 13: Füllstand
- 14: Stelle
- R0: erster Referenzwiderstandswert
- R1: Widerstands-Veränderungswert
- R2: zweiter Referenzwiderstandswert

## Patentansprüche

1. Vorrichtung (2) zur Bestimmung eines Flüssigkeitsstands in einer Dampferzeugungseinrichtung (3) eines Dampfgargeräts (1), mit einem Behälter (4) für die Flüssigkeit (6) und einer Elektrodenanordnung (8), welche eine erste Elektrode (9) und eine davon beabstandet angeordnete zweite Elektrode (10) aufweist, wobei sich die Elektroden (9, 10) in den Behälter (4) erstrecken, wobei die Elektroden (9, 10) in vertikaler Richtung betrachtet übereinander und beabstandet zueinander angeordnet sind oder horizontal nebeneinander angeordnet sind und sich mit ihren untersten Stelle auf gleichem Höhenniveau befinden, und mit einer Auswerteeinheit (11), welche zur Erfassung eines von einem Ist-Flüssigkeitsstand abhängigen elektrischen Ist-Widerstandswerts zwischen den Elektroden (9, 10) ausgebildet ist, **dadurch gekennzeichnet, dass** die Vorrichtung (2) derart ausgebildet ist, dass ein erster elektrischer Referenzwiderstandswert (R0) abgespeichert ist, welcher von der Zusammensetzung der Flüssigkeit abhängt und einen oberen Flüssigkeitsstand in dem Behälter (4) charakterisiert, bei dem die Flüssigkeit (6) beide Elektroden (9, 10) benetzt, wobei ein zweiter Referenzwiderstandswert (R2) durch die Summe des ersten Referenzwiderstandswerts (R0) und einem Widerstands-Veränderungswert (R1) gebildet ist, wobei die Vorrichtung (2) derart ausgebildet ist, dass eine wertmäßige Änderung des Widerstandswerts (R1) zwischen dem ersten Referenzwiderstandswert (R0) und einem einen unteren Flüssigkeitsstand im Behälter (4) charakterisierenden zweiten Referenzwiderstandswert (R2) als der Widerstands-Veränderungswert (R1) abgespeichert wird, und die Vorrichtung (2) derart ausgebildet ist, dass abhängig von einem Vergleich der abgespeicherten Änderung des Widerstandswerts (R1) mit einer Ist-Änderung des Ist-Widerstandswerts der Ist-Flüssigkeitstand bestimmt wird.

2. Vorrichtung (2) nach Anspruch 1, bei welcher der zweite elektrische Referenzwiderstandswert (R2) abgespeichert ist, welcher einen unteren Flüssigkeitsstand (13) charakterisiert, bei dem der Behälter (4) nicht maximal gefüllt ist, insbesondere zumindest eine Elektrode (9, 10) unbenetzt ist.

3. Vorrichtung (2) nach Anspruch 2, bei welcher der untere Flüssigkeitsstand (13) ein Nachfüll-Flüssigkeitsstand ist, bei welchem, insbesondere automatisch, Flüssigkeit (6) in den Behälter (4) geleitet wird.

4. Vorrichtung (2) nach einem der Ansprüche 1 bis 3, **dadurch gekennzeichnet, dass** der Widerstands-Veränderungswert (R1) unabhängig von der Art der verwendeten Flüssigkeit (6) vorgegeben ist.

5. Vorrichtung (2) nach einem der Ansprüche 1 bis 4, **dadurch gekennzeichnet, dass** der erste Referenzwiderstandswert (R0) abhängig von der Art der verwendeten Flüssigkeit (6) ist.

6. Vorrichtung (2) nach einem der Ansprüche 1 bis 5, **dadurch gekennzeichnet, dass** die Auswerteeinheit (11) derart ausgebildet ist, dass der Ist-Widerstandswert mit zumindest einem Referenzwiderstandswert (R0, R2) verglichen wird und abhängig davon der Flüssigkeitsstand bestimmbar ist.

7. Vorrichtung (2) nach einem der vorhergehenden Ansprüche, bei welcher die Bestimmung des Ist-Flüssigkeitsstands eine relative Bestimmung ist, insbesondere der erste Referenzwiderstandswert (R0) abhängig von der jeweils verwendeten Flüssigkeit (6) ist und die Zahl der Änderung des Widerstandswert zur Charakterisierung eines unteren Flüssigkeitsstands (15) ausgehend von dem ersten Referenzwiderstandswert (R0) unabhängig von der jeweiligen Flüssigkeit (6) festgelegt ist.

8. Dampfgargerät (1) **gekennzeichnet durch** eine Vorrichtung (2) nach einem der vorhergehenden Ansprüche.

9. Verfahren zur Bestimmung eines Flüssigkeitsstands in einer Dampferzeugungseinrichtung (3) eines Dampfgargeräts (1), mit einem Behälter (4) für die Flüssigkeit (6) und einer Elektrodenanordnung (8), bei welcher eine erste Elektrode (9) angeordnet wird und davon beabstandet eine zweite Elektrode (10) angeordnet wird, wobei die Elektroden (9, 10) in vertikaler Richtung betrachtet übereinander und beabstandet zueinander angeordnet sind oder horizontal nebeneinander angeordnet sind und sich mit ihren untersten Stelle auf gleichem Höhenniveau befinden, wobei sich die Elektroden (9, 10) in den Behälter (4) erstrecken, und eine Erfassung eines von einem Ist-Flüssigkeitsstand abhängigen elektrischen Ist-Widerstandswerts zwischen den Elektroden (9, 10) durchgeführt wird und abhängig von dem Ist-Widerstandswert der Ist-Flüssigkeitsstand bestimmt wird, **dadurch gekennzeichnet, dass** ein erster elektrischer Referenzwiderstandswert (R0) abgespeichert wird, welcher von der Zusammensetzung der Flüssigkeit abhängt und einen Flüssigkeitsstand in dem Behälter (4) charakterisiert, bei dem die Flüssigkeit (6) beide Elektroden (9, 10) benetzt, wobei ein zweiter Referenzwiderstandswert (R2) durch die Summe des ersten Referenzwiderstandswerts (R0) und einem Widerstands-Veränderungswert (R1) gebildet wird, wobei ausgehend von dem ersten Referenzwiderstandswert (R0) eine wertmäßige Änderung des Widerstandswerts (R1) zwischen dem ersten Referenzwiderstandswert (R0) und einem einen unteren Flüssigkeitsstand im Behälter (4) charakterisierenden zweiten Referenzwiderstandswert (R2) als der Widerstands-Veränderungswert (R1) abgespeichert wird, und abhängig von einem Vergleich der abgespeicherten Änderung des Widerstandswerts (R1) mit einer Ist-Änderung des Ist-Widerstandswerts der Ist-Flüssigkeitstand bestimmt wird.

10. Verfahren nach Anspruch 9, bei welchem die Bestimmung des Ist-Flüssigkeitsstands eine relative Bestimmung ist, insbesondere der erste Referenzwiderstandswert (R0) abhängig von der jeweils verwendeten Art der Flüssigkeit (6) bestimmt wird und die Zahl der Änderung des Widerstandswert zur Charakterisierung eines unteren Flüssigkeitsstands (13) ausgehend von dem ersten Referenzwiderstandswert (R0) unabhängig von der jeweiligen Art der verwendeten Flüssigkeit (6) festgelegt wird.

## Claims

1. Device (2) for determining a liquid level in a steam generator (3) of a steam cooker (1), having a container (4) for the liquid (6) and an electrode arrangement (8), which has a first electrode (9) and a second electrode (10) arranged at a distance therefrom, wherein the electrodes (9, 10) extend into the container (4), wherein viewed in the vertical direction the electrodes (9, 10) are arranged one above the other and at a distance from one another or are arranged horizontally adjacent to one another and are located with their lowest point at the same height level and having an evaluation unit (11), which is embodied for detecting an electrical actual resistance value which is dependent on an actual liquid level between the electrodes (9, 10), **characterised in that** the device (2) is embodied so that a first electrical reference resistance value (R0) is stored which depends on the composition of the liquid and characterises an upper liquid level in the container (4), in which the liquid (6) wets both electrodes (9, 10), wherein a second reference resistance value (R2) is formed by the sum of the first reference resistance value (R0) and a resistance change value (R1), wherein the device (2) is embodied so that a change, by value, in the resistance value (R1) between the first reference resistance value (R0) and a second reference resistance value (R2) characterising a lower liquid level in the container (4) is stored as the resistance change value (R1), and the device (2) is embodied so that the actual liquid level is determined as a function of a comparison of the stored change in the resistance value (R1) with an actual change in the actual resistance value.

2. Device (2) according to claim 1, in which the second electrical reference resistance value (R2) is stored, which characterises a lower liquid level (13), in which the container (4) is not filled to a maximum, in particular at least one electrode (9, 10) is not wet.

3. Device (2) according to claim 2, in which the lower liquid level (13) is a refill liquid level, with which liquid (6) is routed into the container (4), in particular automatically.

4. Device (2) according to one of claims 1 to 3, **characterised in that** the resistance change value (R1) is predetermined independently of the type of liquid (6) used.

5. Device (2) according to one of claims 1 to 4, **characterised in that** the first reference resistance value (R0) is dependent upon the type of liquid (6) used.

6. Device (2) according to one of claims 1 to 5, **characterised in that** the evaluation unit (11) is embodied so that the actual resistance value is compared with at least one reference resistance value (R0, R2) and the liquid level can be determined as a function thereof.

7. Device (2) according to one of the preceding claims, in which the determination of the actual liquid state is a relative determination, in particular the first reference resistance value (R0) is dependent upon the respectively used liquid (6) and the number of the change in the resistance value is established independently of the respective liquid (6) in order to characterise a lower liquid state (15) based on the first reference resistance value (R0).

8. Steam cooker (1) **characterised by** a device (2) according to one of the preceding claims.

9. Method for determining a liquid level in a steam generator (3) of a steam cooker (1), having a container (4) for the liquid (6) and an electrode arrangement (8), in which a first electrode (9) is arranged and a second electrode (10) is arranged at a distance therefrom, wherein viewed in the vertical direction the electrodes (9, 10) are arranged one above the other and at a distance from one another or horizontally adjacent to one another and are located with their lowest point at the same height level, wherein the electrodes (9, 10) extend into the container (4), and a detection of an electrical actual resistance value which depends on an actual liquid level is carried out between the electrodes (9, 10) and the actual liquid level is determined as a function of the actual resistance value, **characterised in that** a first electrical resistance value (R0) is stored, which depends on the composition of the liquid and characterises a liquid level in the container (4), in which the liquid (6) wets both electrodes (9. 10), wherein a second reference resistance value (R2) is formed by the sum of the first reference resistance value (R0) and a resistance change value (R1), wherein based on the first reference resistance value (R0) a change, by value, in the resistance value (R1) between the first reference resistance value (R0) and a second reference resistance value (R2) characterising a lower liquid level in the container (4) is stored as the resistance change value (R1), and the actual liquid state is determined as a function of a comparison of the stored change in the resistance value (R1) with an actual change in the actual resistance value.

10. Method according to claim 9, in which the determination of the actual liquid level is a relative determination, in particular the first reference resistance value (R0) is determined as a function of the respectively used type of liquid (6), and the number of the change in the resistance value is established independently of the respective type of liquid (6) used in order to characterise a lower liquid state (13) based on the first reference resistance value (R0).

## Revendications

1. Dispositif (2) de détermination d'un niveau de liquide dans un système de production de vapeur (3) d'un appareil de cuisson à la vapeur (1), comprenant un récipient (4) pour le liquide (6) et un arrangement d'électrodes (8), lequel comprend une première électrode (9) et une deuxième électrode (10) écartée de celle-ci, les électrodes (9, 10) s'étendant dans le récipient (4), les électrodes (9, 10) étant arrangées, vues dans le sens vertical, les une au-dessus des autres et écartées l'une de l'autre ou étant disposées horizontalement l'une à côté de l'autre et se trouvant, avec leur position la plus inférieure, à un même niveau de hauteur, et comprenant une unité d'analyse (11), laquelle est réalisée entre les électrodes (9, 10) pour la saisie d'une valeur de résistance électrique réelle qui dépend du niveau de liquide réel, **caractérisé en ce que** le dispositif (2) est réalisé de sorte qu'une première valeur de résistance de référence électrique (R0) est mémorisée, laquelle dépend de la composition du liquide et caractérise un niveau de liquide supérieur dans le récipient (4), auquel le liquide (6) mouille les deux électrodes (9, 10), une deuxième valeur de résistance de référence (R2) étant formée par la somme de la première valeur de résistance de référence (R0) et une valeur de changement de résistance (R1), le dispositif (2) étant réalisé de sorte qu'un changement de valeur de la valeur de résistance (R1) entre la première valeur de résistance de référence (R0) et une deuxième valeur de résistance de référence (R2) caractérisant un niveau de liquide inférieur dans le récipient (4), est mémorisé en tant que valeur de changement de résistance (R1), et le dispositif (2) est réalisé de façon qu'en fonction de la comparaison du changement mémorisé de la valeur de résistance (R1) avec un changement réel de la valeur de résistance réelle, le niveau de liquide réel est déterminé.

2. Dispositif (2) selon la revendication 1, dans lequel la deuxième valeur de résistance de référence électrique (R2) est mémorisée, laquelle caractérise un niveau de liquide inférieur (13) auquel le récipient (4) n'est pas rempli au maximum, en particulier au moins une électrode (9, 10) n'est pas mouillée.

3. Dispositif (2) selon la revendication 2, dans lequel le niveau de liquide inférieur (13) est un niveau de liquide de remplissage, auquel, en particulier automatiquement, du liquide (6) est conduit dans le récipient (4).

4. Dispositif (2) selon l'une des revendications 1 à 3, **caractérisé en ce que** la valeur de changement de résistance (R1) est prédéfinie indépendamment du type de liquide (6) utilisé.

5. Dispositif (2) selon l'une des revendications 1 à 4, **caractérisé en ce que** la première valeur de résistance de référence (R0) est fonction du type de liquide (6) utilisé.

6. Dispositif (2) selon l'une des revendications 1 à 5, **caractérisé en ce que** l'unité d'analyse (11) est réalisée de sorte que la valeur de résistance réelle est comparée avec au moins une valeur de résistance de référence (R0, R2) et, en fonction de cela, le niveau de liquide peut être déterminé.

7. Dispositif (2) selon l'une des revendications précédentes, dans lequel la détermination du niveau de liquide réel est une détermination relative, en particulier la première valeur de résistance de référence (R0) dépend du liquide (6) à chaque fois utilisé, et le nombre de changements de la valeur de résistance pour la caractérisation d'un niveau de liquide (15) inférieur est fixé sur base de la première valeur de résistance de référence (R0) indépendamment du liquide (6) respectif.

8. Appareil de cuisson à la vapeur (1) **caractérisé par** un dispositif (2) selon l'une des revendications précédentes.

9. Procédé de détermination d'un niveau de liquide dans un système de production de vapeur (3) d'un appareil de cuisson à la vapeur (1), comprenant un récipient (4) pour le liquide (6) et un arrangement d'électrodes (8), dans lequel une première électrode (9) est arrangée et une deuxième électrode (10) est disposée écartée de celle-ci, les électrodes (9, 10) étant arrangées, vues dans le sens vertical, les unes au-dessus des autres et écartées l'une de l'autre ou étant disposées horizontalement les unes à côté des autres et se trouvant, avec leur position la plus inférieure, à un même niveau de hauteur, les électrodes (9, 10) s'étendant dans le récipient (4), et une saisie d'une valeur de résistance réelle électrique dépendant d'un niveau de liquide réel entre les électrodes (9, 10) étant effectuée et en fonction de la valeur de résistance réelle, le niveau de liquide réel est déterminé. **caractérisé en ce qu'**une première valeur de résistance de référence électrique (R0) est mémorisée, laquelle dépend de la composition du liquide et caractérise un niveau de liquide dans le récipient (4), auquel le liquide (6) mouille les deux électrodes (9, 10), une deuxième valeur de résistance de référence (R2) étant formée par la somme de la première valeur de résistance de référence (R0) et une valeur de changement de résistance (R1), sur base de la première valeur de résistance de référence (R0), un changement de valeur de la valeur de résistance (R1) entre la première valeur de résistance de référence (R0) et une deuxième valeur de résistance de référence (R2) caractérisant un niveau de liquide inférieur dans le récipient (4), étant mémorisé en tant que valeur de changement de résistance (R1), et en fonction de la comparaison du changement mémorisé de la valeur de résistance (R1) avec un changement réel de la valeur de résistance réelle, le niveau de liquide réel est déterminé.

10. Procédé selon la revendication 9, dans lequel la détermination du niveau de liquide réel est une détermination relative, en particulier la première valeur de résistance de référence (R0) est déterminée en fonction du type de liquide (6) à chaque fois utilisé, et le nombre de changements de la valeur de résistance pour la caractérisation d'un niveau de liquide (13) inférieur est fixé sur base de la première valeur de résistance de référence (R0) indépendamment du type respectif de liquide (6) utilisé.
